# EUROPEAN PATENT APPLICATION

(11) **EP 0 558 988 A1**
(43) Date of publication of application: **08.09.1993**
(21) Application number: 93102377.4
(22) Date of filing: 16.02.1993
(51) Int. Cl.: E04G 21/12, B65H 59/38

(54) **Machine for inserting a steel tendon sheathed in rubber or the like into concrete panels, in particular for the construction of above-ground tanks**

(30) Priority: 02.03.1992 IT PC920004
(71) Applicant: Parenti, Luigi, I-29100 PIACENZA (PC) (IT)
(72) Inventor: Parenti, Luigi, I-29100 PIACENZA (PC) (IT)
(74) Representative: La Ciura, Salvatore

(57) **Abstract**

A machine designed to insert a steel tendon (8) sheathed in soft material into concrete panels, comprising:
- a structure (1) to which is fitted a reel (4) on which the tendon (8) is wound
- two pairs of synchronised rubber rollers (9) which push the said tendon into the duct in the panels
- braking equipment (12, 11) which acts on the said reel to prevent or limit unwinding
- means (14, 15, 16) which acts on the said braking equipment in order to release it when the force exerted by the motor driving the said rubber rollers exceeds a preset value.

Application to the construction of above-ground tanks.

## Description

This invention relates to a machine designed to insert a rubber- or PVC-sheathed steel prestress-cable or tendon into concrete panels of the sort used to make above-ground tanks.

The machine comprises a framework to which the reel on which the tendon is wound is fitted, a brake which acts on the shaft of the said reel, two pairs of rubber rollers driven by a hydraulic motor which grip the tendon and push it into the ducts in the panels, and control equipment which releases the said brake when the pressure of the fluid driving the hydraulic motor exceeds a preset value.

The machine in accordance with the invention enables tendons to be inserted easily into the panels used to make circular above-ground tanks, without damaging the rubber sheathing which protects the steel tendons against corrosion.

Above-ground tanks have come to be used very widely in recent years in various sectors of industry and agriculture, used, for example, for making depurators, as sewage tanks, etc.

One of the technologies used to manufacture these tanks calls for the use of precast reinforced concrete panels some 5-6 metres high and 2-2,5 metres wide, which are assembled by placing them side by side and securing them with tendons inserted into ducts in the panel and then tensioned.

This tendon insertion operation is quite difficult and complicated. A tendon some 60 metres long (the circumference of an average-sized tank) and approx. 10-20 millimetres in diameter has to be inserted into a duct with walls made of concrete, which do not allow it to slide through easily.

These tendons are steel cables sheathed in corrosion-proof material, especially rubber or PVC.

These tendons weigh some 1,5 kg/m, so the total weight of a 60-metre tendon is over 100 kg.

The difficulties encountered in this operation are therefore understandable, especially in view of the fact that some tendon ducts are located at the top of the panels, and work therefore has to be carried out several metres above ground.

Current state-of-the-art tendons are inserted by hand; a small dialeter steel cable is first inserted into the duct and then attached to the end of the tendon, which is inserted by pulling the thin cable at one end and pushing the tendon at the other.

However, the operation is by no means easy, partly because of the numerous joints between panels encountered by the tendon along its route.

Tests have been conducted using a pair of motor-driven steel pulleys which grip the tendon and push it into the duct in the panels.

However, this system has also proved unsatisfactory, because the rubber sheathing overheats and the force exerted on it by the rollers tends to split it, thus exposing the steel beneath to the effects of corrosion. The problem has therefore not been fully solved, and the need is felt in the industry for equipment which enables a rubber-sheathed cable to be inserted into the ducts in panels used to make above-ground tanks without the difficulties mentioned above.

In order to solve the problem, this invention offers a machine comprising a support for the reel on which the tendon is wound, a brake which acts on the said reel, two pairs of motorised rubber rollers which grip the tendon and push it into the panels, and equipment which gradually releases the brake when the pressure sent to the hydraulic motor driving the said rollers exceeds a preset value.

This invention will now be described in detail, by way of example but not of limitation, by reference to the annexed figures in which:
- figure 1 is a schematic side view of the machine in accordance with the invention
- figure 2 is a front view of the machine in accordance with the invention
- figure 3 schematically illustrates the machine's hydraulic circuit.

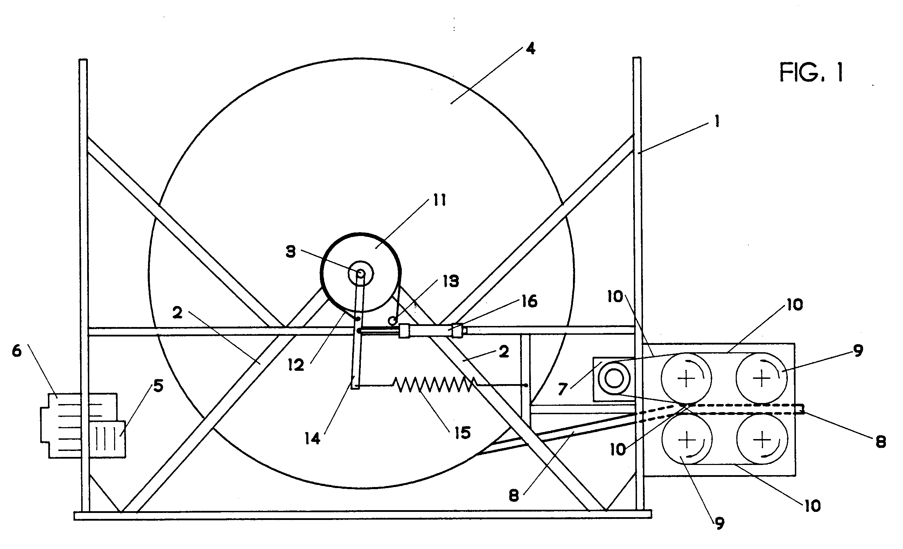

As shown in figure 1, the machine in accordance with the invention comprises a framework 1 made, for example, from metal structural sections, with a pair of supports 2 for the shaft 3 of a reel 4 on which the tendon is wound.

The reel with its shaft is lifted from above onto supports 2, for example by a crane.

A pump 5 driven by an electric motor 6 is fitted to framework 1; the said pump feeds a hydraulic motor 7 of known type which rotates two pairs of rubber rollers fitted to a structure built into framework 1.

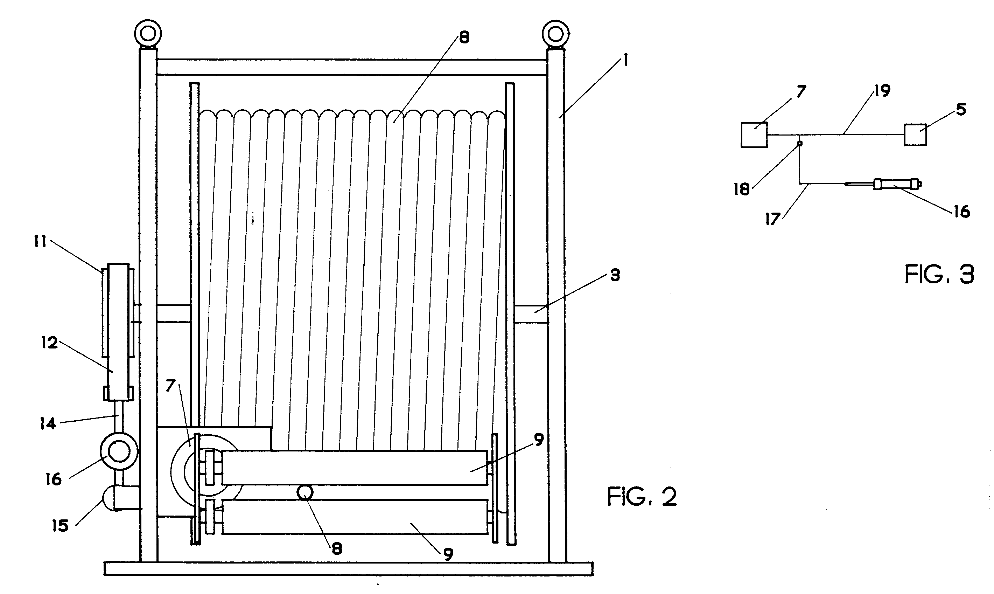

The roller drive system is illustrated in figure 2, in which no. 8 represents the tendon, no. 9 represents the rollers, the direction of rotation of each one being indicated, and no. 10 represents four belts which transmit motion from the motor to the first roller and thence to the other rollers.

A band brake 12 acts on disc 11, which is fitted to shaft 3 of reel 4; one end of the brake is hinged at 13 to the structure of the machine, and the opposite end is fixed to a lever 14.

Lever 14 is subject to the action of a spring 15 which acts on the lever so as to tension belt 12 and brake the disc with the reel.

A hydraulic piston 16 also acts on lever 14, in the opposite direction to spring 15.

Piston 16 is connected to the supply circuit 19 of motor 7 (fig. 3) via a pipe 17 to which a pressure reducer with a solenoid valve 18 is fitted.

The pressurised oil conveyed to the hydraulic rollerdrive motor thus also drives piston 16.

The machine operates in the following manner:
When the tendon reel has been mounted on structure 1, it is secured by band brake 12 which is kept pressed against disc 11 by spring 15.

This function is required to prevent the elasticity of the tendon material from acting as a spring and unwinding the tendon from the reel.

When the end of the tendon has been inserted between rollers 9, the machine is lifted with a crane to the height of the ducts in which the tendon is to be inserted.

At this point pump 5 can be activated to convey pressurised fluid to hydraulic motor 7, which rotates rollers 9.

These push the tendon forward, feeding it along the ducts in the panels.

Rollers 9 are long enough to cover the entire width of reel 4, so that the tendon can easily be pulled and guided from whatever position it holds along the reel axis.

The fact that rollers 9 are made of rubber means that sufficient friction can be exerted on the tendon sheathing material, usually rubber or PVC, without its being excessively strained or damaged.

Solenoid valve 18 is calibrated to open, conveying fluid to piston 16, when the pressure in circuit 19 exceeds a preset value, e.g. when it reaches around a tenth of the operating pressure.

When valve 18 opens, some of the fluid flows from pipe 17, where suitable pressure reducers are located, to piston 16, which acts on lever 14, counteracting the force exerted by spring 15; this slightly releases band brake 12 and allows the reel to rotate while the tendon is unwound by rollers 9.

When the pressure in circuit 19 falls, e.g. because motor 7 stops, the flow of fluid from circuit 19 to line 17 is cut off, piston 16 stops operating and spring 15 returns lever 14 to its original position, thus causing band brake 12 to brake disc 11 and therefore the reel again.

Thus the tendon always remains taut, thereby preventing the "spring" effect described above.

## Claims

1. Machine designed to insert a steel tendon (8) sheathed in soft material into concrete panels or the like, characterised by the fact that it comprises:
- a structure (1) to which is fitted a reel (4) on which the tendon is wound
- at least one pair of rubber rollers (9) which push the said tendon into the duct in the panels
- braking equipment (12, 11) which acts on the said reel to prevent or limit unwinding
- means (14, 15, 16) which acts on the said braking equipment in order to release it when the force exerted by the motor driving the said rubber rollers exceeds a preset value.

2. Machine in accordance with claim 1, characterised by the fact that two pairs of synchronised rubber rollers(9) driven by a hydraulic motor (7) are used to unwind and insert the tendon (8).

3. Machine in accordance with claims 1 and 2, characterised by the fact of providing, for impeding the unwinding of the reel (4), a band brake (12) acting on a disc (11) built into the reel shaft (3), said machine being also fitted with elastic means (15) acting continuously on the said brake to apply it and hydraulic equipment (16, 14) acting on the said brake to release it, the said hydraulic equipment coming into operation when the pressure in the hydraulic circuit driving the motor exceeds a preset value.

4. Machine in accordance with the preceding claims, characterised by the fact that the said piston (16) which releases the said band brake (12) is supplied by the same fluid which feeds the rubber roller drive motor (7), means being provided designed to cause a pressure drop in the circuit leading to the said piston and means designed to close the said circuit when the pressure falls below a preset value.
